# EUROPÄISCHE PATENTSCHRIFT

(11) **EP 1 911 883 B1**
(45) Veröffentlichungstag und Bekanntmachung des Hinweises auf die Patenterteilung: **03.07.2019**
(21) Anmeldenummer: 07090128.5
(22) Anmeldetag: 05.10.2007
(51) Int. Cl.: E01D 18/00, A01K 3/00

(54) **Kleintierbrücke für Fliessgewässer-Verkehrsweg-Kreuzungen**
Bridge for small animals for crossing flowing water traffic ways
Pont pour petits animaux destiné à des croisements de voies de communication d'eaux

(30) Priorität: 06.10.2006 DE 102006047679; 06.10.2006 DE 202006015420 U
(43) Veröffentlichungstag der Anmeldung: 16.04.2008
(73) Patentinhaber: Wilcke, Claudia Katrin, 18119 Rostock (DE)
(72) Erfinder: Wilcke, Claudia Katrin, 18119 Rostock (DE)

(56) Entgegenhaltungen:
- DE-U1- 29 502 373
- GB-A- 703 068
- JP-A- 5 227 860

## Beschreibung

### 1. Themengebiet

Mit Kleintierbrücken werden Fließgewässer - Verkehrsweg - Kreuzungen nach- bzw. ausgerüstet, wenn unterhalb der Straßenbrücken die Durchlässe keine Bermen oder natürliche bzw. naturnahe Uferstrukturen aufweisen. Ihr Einsatz erfolgt dementsprechend im Rahmen der ökologischen Sanierung von Fließgewässern, d. h. im Wasserbau.

### 2. Stand der Technik

Bekannte technische Varianten, semiaquatisch lebenden Kleintieren bzw. -säugern den Durchgang unterhalb von Straßen / Verkehrswegen im räumlichen Zusammenhang mit Fließgewässern zu gewähren, sind:
a) Trockenröhren, -tunnel
b) gemauerte Uferbermen
c) Uferrandstreifen aus Faschinen mit Holzpfählen und Steinhinterfüllung
d) Holzpfahlstege und
e) Steingefüllte Gabionen (sog. Drahtsteinkörbe bzw. Drahtschotterkörbe).

Alle Varianten wurden durch Frau Heike Neumann in ihrer Diplomarbeit zum Thema: Präventivmaßnahmen im Otterschutz unter besonderer Berücksichtigung der Verkehrssituation (Universität Rostock, Agrarwissenschaftliche Fakultät, Fachbereich Landeskultur und Umweltschutz, 1997) erwähnt.
a) Trockenröhren bzw. -tunnel werden insbesondere neben gefluteten Rohrlässen, Dükern, Wehren - also bei sehr beengten Platzverhältnissen - angeordnet. Sie sind nicht immer gut für die Tiere auffindbar und weisen keine natürlichen Strukturen, d. h. Bewuchs, auf. Fehlende Fluchtmöglichkeiten, insbesondere bei langen Tunneln, wie sie sich für breite Straßen oder bei Autobahnen ergeben, führen zu Aversionen der Tiere gegenüber dieser Passage. Zudem sind sehr große Durchmesser der Röhren bei entsprechender Länge nötig, um von den Ottern etc. angenommen zu werden. Das wiederum ist mit hohen Investitionskosten verbunden. Allgemein ist für den Einbau solcher Röhren ein hoher Arbeitsaufwand nötig.
b) Gemauerte Uferbermen setzen einen ausreichend großen Fließquerschnitt voraus, da sie diesen einengen. Der Wasserrückstau vor der Verkehrsbrücke nimmt zu. Diese Variante kann nur eingesetzt werden, wenn der Hochwasserabfluss trotz der entstehenden Verengung gesichert ist. Für den Bau muss der Arbeitsraum gegen Wasser abgeschirmt werden, so dass eine zeitweilige Umleitung des Gewässers oder eine aufwändige bauliche Konstruktion nötig wird, die Bermen zu erstellen. (Anderfalls ist eine Unterwasserbetonierung möglich - aber ebenfalls kosten- und arbeitsaufwändig.) Uferbermen versperren in jedem Fall den Blick auf den unteren Anteil des Brückenpfeilers bzw. -fußes.
c) Uferrandstreifen, die aus Faschinen und Holzpfählen mit Steinhinterfüllung hergestellt werden, verringern ebenfalls den Abflussquerschnitt und sind damit für enge Durchlässe ungeeignet. Für das Rammen der Holzpfähle ist eine gewisse Mindesthöhe des Durchlasses notwendig, der jedoch oft nicht gegeben ist. Zudem kann das Rammen selbst zu Beeinträchtigungen am Fundament der Brücke führen. Uferrandstreifen ermöglichen ebenfalls keine freie Sicht auf die unteren Anteile der Brückenkonstruktion. Und Holz wie Faschinen unterliegen der Verrottung.
d) Holzpfahlstege engen den Durchflussquerschnitt nicht ein, sie ermöglichen auch die Sicht auf die Brückenpfeiler und sie sind eine einfache und relativ kostengünstige Lösung. Ihre Konstruktion setzt aber, wie bereits vorhergehend beschrieben, eine Mindesthöhe zum Rammen der Pfähle voraus, und das Rammen selbst ist auch für die Brücke nicht immer vollkommen gefahrlos. Von deutlichem Nachteil ist weiterhin das Verrotten des Steges.
e) Bei Gabionen handelt es sich um mit Steinen oder Schotter gefüllte Drahtkörbe, deren Oberfläche zur besseren Passage mit Holzbrettern bzw. -bohlen belegt wird. Sie aufzustellen ist mit kostenintensiver Handarbeit verbunden. Wie bei allen Varianten, die den Abflussquerschnitt einengen, ist auch hier keine Sicht auf die Brückenpfeiler hinter den Gabionen möglich, um Schäden am Brückenbauwerk frühzeitig festzustellen. Für schmale Durchlässe ist diese Variante ungeeignet. Hinzu kommt, dass die Holzanteile verrotten und die Drahtkörbe verrosten.

### 3. Problem

Durch Straßen, Autobahnen und Eisenbahnstrecken werden bekanntermaßen Biotope zerschnitten. Zu diesen Biotopen zählen auch Bäche und Flüsse. In diesen Bereichen versuchen semiaquatisch lebende Kleintiere, wie z. B. Fischotter (weiterhin: Bisamratte, Braunbrustigel, Dachs, Elbebiber, Fuchs, Hausratte, Hermelin, Mauswiesel, Mink, Steinmarder, Waldiltis, Wanderratte, Wasserspitzmaus usw.) verstärkt, die Straßen zu überwinden, was häufig zum Verkehrstod der Tiere führt.

Untersuchungen haben ergeben, dass u. a. die in der Vergangenheit oft knapp bemessenen Fließgewässerdurchlässe, welche keine natürlichen Uferstrukturen im Brückenbereich aufweisen, zu Aversionen der Tiere führen, sodass die Durchlässe, obwohl theoretisch möglich, nicht durchschwommen werden. Und Tiere, die an Flüssen leben, aber selbst keine Schwimmer sind, suchen ebenfalls den Weg über die Straße, da Ufer fehlen.

Zu einem Komplex von Maßnahmen, der den Tieren den Weg durch den Brückendurchlass ermöglichen soll, gehört die Kleintierbrücke, in der Literatur auch Otterpassage genannt, da für Otter die Schutzbedürftigkeit nachgewiesen ist, sie als besonders sensibel gelten und ein ausgeprägtes Wanderverhalten zeigen. Wie bereits beschrieben, stehen dafür verschiedene Varianten, eine Kleintierbrücke zu bauen, zur Auswahl. Alle bekannten Möglichkeiten sind jedoch problembehaftet. Entweder engen sie die ohnehin schon schmalen Durchlässe (oft nur genauso breit wie die Sohlbreite des Flusses) weiter ein, sodass der Bemessungshochwasserdurchfluss nicht mehr gesichert ist [gemauerte Uferbermen, Uferrandstreifen aus Faschinen und Steinfüllung, Gabionen]; oder sie sind nur mit großem Aufwand realisierbar [Trockenröhren, -tunnel, Unterwassermauerwerk bzw. zeitweilige Flussumleitung]; sie verrotten mit der Zeit [Holz, Faschinen, Gabionenkörbe] oder sie lassen sich an dem betreffenden Standort nicht realisieren, weil die Einbauhöhen [Rammhöhe für Holzpfähle] nicht gegeben sind. Hinzu kommt, dass Trockenröhren z. B. auch nicht entsprechend angenommen werden, da sie den Tieren während der Passage keine Fluchtmöglichkeit bieten.

### 4. Lösung einschließlich erreichter Vorteile

Es wurde nach einer Lösung für eine Kleintierbrückenkonstruktion gesucht, die die Vorteile der bisherigen Varianten vereint und dabei die Nachteile minimiert. Zudem wurde nach einer möglichst universell einsetzbaren Lösung gesucht. Und diese wurde mit der Kleintierbrücke (auch Otterpassage genannt), welche nachfolgend beschrieben wird, gefunden.

Die Kleintierbrücke besteht aus aneinanderreihbaren bzw. zusammensetzbaren Betonfertigteilen, die durch Ineinanderhaken an den Stirnseiten (Oberkante), Ineinanderschieben der Elemente an den Stirnseiten (Rillen (22)) oder durch den Einsatz von Verbindungsteilen (19) (Stahlbeton, Beton, Stahl, Eisen o. ä. / z. B. U-Stücke) verbunden werden und so beliebig lange Otterwege (Lauflänge) ergeben. Die Einbindung in die Böschung erfolgt über Winkelteile, die Endglieder oder Zwischenstücke sein können.

Die Betonteile können in verschiedenen Standardgrößen gefertigt werden. Die Bemessung der Höhe der Betonteile erfolgt in Abhängigkeit vom durchschnittlichen, sommerlichen und winterlichen Jahresmittelwasserstand, die Breite ergibt sich aus der notwendigen Laufwegbreite für Otterpassagen von mindestens 0,5 m und einer eventuellen Breitenzugabe infolge konstruktiver Besonderheiten des jeweiligen Durchlasses (z. B. Durchlasseinengungen oberhalb der Wasserlinie).

Die Fertigteile bestehen aus Beton, Wasch-, Stahl- oder Porenbeton. Die allgemeine Wandstärke richtet sich nach der Größe der Fertigteile, beträgt aber im Normalfall ca. 5 cm, bei größeren Ausführungen und Elementen aus Stahlbeton entsprechend mehr.

Die Kanten werden leicht gerundet, um die Widerstände des abfließenden Wassers zu minimieren.

Die Oberfläche der Kleintierbrücke bildet eine geschlossene Lauffläche (13) mit leicht erhöhten Seitenkanten (14), so dass Steine, die der Markierung dienen (Duftmarkierung), Totholz, Kies o. ä. darauf gelagert werden können ohne gleich herunterzurollen.

Die Seiten (15) sind möglichst großflächig offen zu gestalten. Dies gewährleistet die freie Einsehbarkeit und Kontrolle des Brückenfußes der Straßenbrücke sowie die freie Durchschwimmbarkeit für die Ichthyofauna. Zudem werden Herstell- und Transportkosten (Betongewicht) dadurch minimiert, und die Teile können während des Transportes ineinander gestellt werden.

Die Stabilität der Seitenteile wird durch Quer- (16), Längs- (18) oder Diagonalverbindungen erreicht.

Es wurde auch eine Variante mit einem Untergeschoss (20) entwickelt, welches die Wanderung der aquatischen Evertebraten unterstützt. Darauf wird in der weiteren Ausgestaltung der Erfindung näher eingegangen.

Weitere Vorteile der Konstruktion bestehen in:
- Langlebigkeit / Haltbarkeit - im Vergleich zur Verrottung von Holzstegen oder der Durchrostung der Gabionenkörbe
- Stabilität - da Beton so massiv ist, dass selbst Hochwasserabflüsse diese Konstruktion nicht einfach mitreißen können;
   es werden auch keine Vibrationen durch den Straßenverkehr auf die Lauffläche übertragen, die sonst zu Aversionen der Tiere führen könnten
- keine wesentliche Querschnittseinengung beim Durchfluss und nur minimaler Aufstau - im Gegensatz zu Gabionen oder gemauerten Bermen, dadurch auch bei beengten Platzverhältnissen einsetzbar
- das Aufstellen der Teile ist bei normalem Abfluss (und jahreszeitlich relativ unabhängig) möglich - im Gegensatz zu Bermen, welche gemauert werden müssen (und u. U. sogar einer Umleitung des Flusses bedürfen)
- der Aufbau ist auch bei geringer Brückenhöhe möglich - im Gegensatz zu Holzstegen oder Uferrandstreifen mit Faschinen, deren Pfähle gerammt werden müssen
- der Aufbau erfolgt ohne Gefahr oder Beeinträchtigung der Straßenbrücke - im Gegensatz zu Pfahlrammarbeiten
- Handarbeit bei der Aufstellung ist gering - im Gegensatz zu Gabionen - und der Aufwand vertretbar
- die Otterpassage muss nicht an der Brücke befestigt werden
- die Konstruktion gewährt den vollen Einblick auf den Brückenfuß zu Kontrollzwecken - im Gegensatz zu Gabionen, gemauerten Bermen oder massiv gestalteten Uferrandstreifen
- bei Bedarf (z. B. Brückenreparatur) ist die Konstruktion wieder entfernbar, ohne dass sie dadurch zerstört werden würde - im Gegensatz zu allen anderen bekannten Varianten
- die Betonteile lassen sich in die Böschung problemlos einbauen und gegebenenfalls verankern
- wenige Größen, d. h. zwei Breiten und etwa drei Höhen reichen aus, um für jeden betroffenen Straßendurchlass die passende Kleintierbrücke konstruieren zu können
- für die Bemessung reichen i. d. R. die Mittelwasserstände (Jahresmittel- und Winterwasserstand), die sich oft bereits an den Brückenpfeilern abzeichnen, die Durchlasshöhe und -breite aus
- aufwendige Planungen und Berechnungen, wie sie für durchlasseinengende Varianten (Faschinenuferrandstreifen, gemauerte Bermen, Gabionen) nötig sind, werden hier minimiert
- durch eine Serien- bzw. Massenproduktion wird eine günstige Preisgestaltung möglich
- die Otterpassage aus Betonfertigteilen ist, wie beschrieben, eine massive Konstruktion - dennoch wiegt sie im Vergleich zu steingefüllten Gabionen der gleichen Größe mit Untergeschoss (leer) nur etwa die Hälfte, ohne diese Spezialausführung sogar noch weniger und
- im Notfall trägt sie auch Menschen oder größere Tiere (als Otter).

### Weitere Ausgestaltung der Erfindung

Eine besondere Variante der Kleintierbrücke ist die Otterpassage, die ein Untergeschoss (20) enthält. Dieses ist gefüllt mit Kies, Sand, Totholz und auch größeren Steinen. Die entstehenden Zwischenräume dienen den Wirbellosen als Wanderwege; das sich dort ansiedelnde Phyto- und Zooplankton dient ihnen als Nahrung. Diese Variante kommt insbesondere dort in Betracht, wo ausreichend Querschnitt im Durchlass vorhanden ist und der Brückendurchlass ansonsten mit Betongitterplatten (12) oder massiver Steinschüttung befestigt wurde, so dass die Wanderung der Evertebraten eingeschränkt ist.

Nach oben hin wird die beschriebene Schicht mit einem Geogitter, welches durchlässig für Wirbellose ist, aber Kies hält, oder stark gelöchertem Beton bedeckt, so dass der Kies usw. bei Hochwasserabfluss im Untergeschoss gehalten wird. Die Seitenwände können ebenfalls durchlässig für Evertebraten gestaltet, d. h. gelöchert oder geschlitzt sein. Die Füllung der Evertebratenwanderschicht erfolgt mit dem Einbau der Betonteile vor Ort.

### Zeichnungen

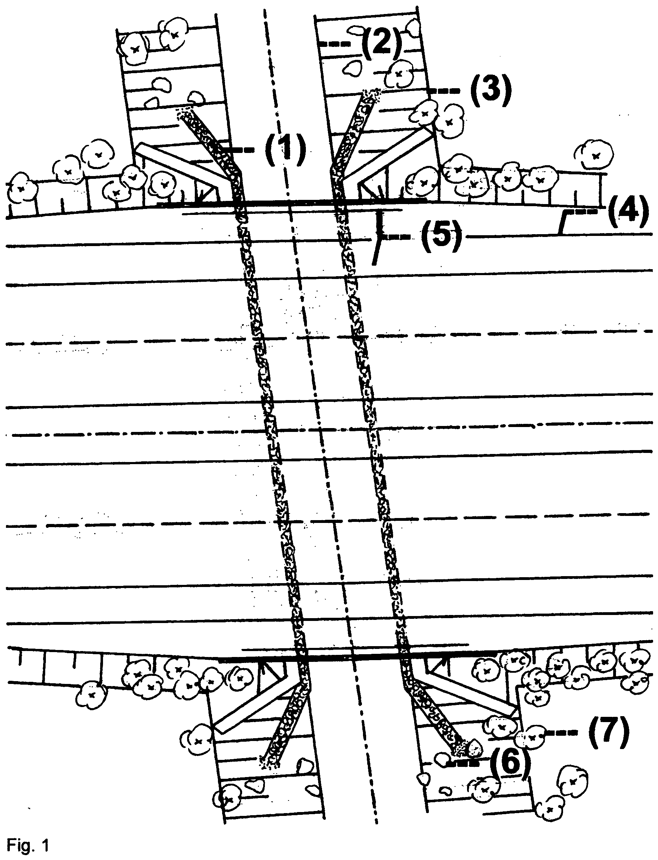

- Figur 1:: Anordnung einer Kleintierbrücke unter einer Straßenbrücke - Draufsicht

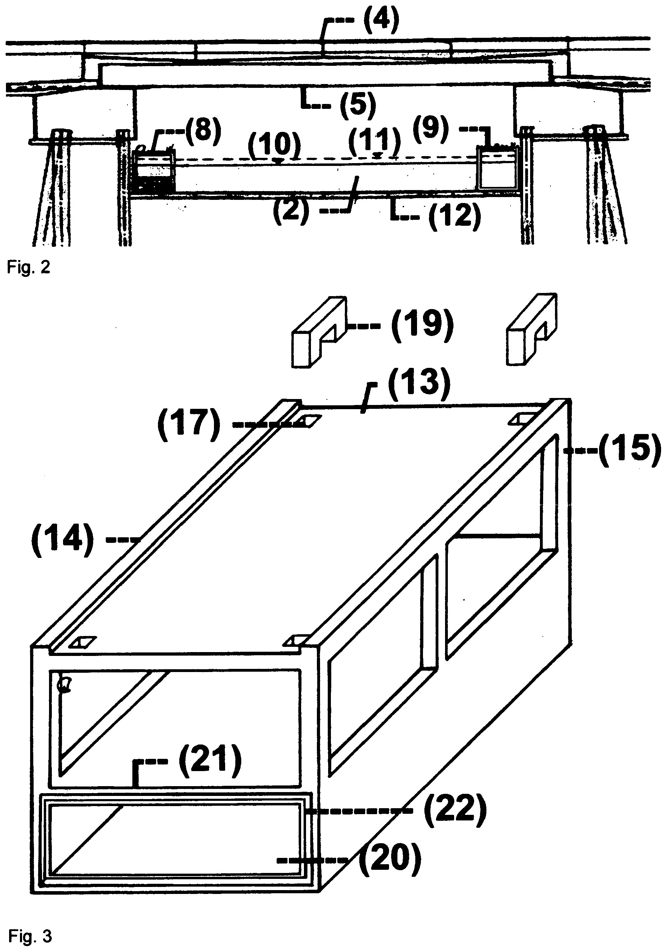

- Figur 2:: Anordnung der Kleintierbrücke unter einer Straßenbrücke - Querschnitt links - eine Otterpassage mit Untergeschoss zur Evertebratenwanderung rechts - eine Otterpassage (Variante mit Querverbindungen)
- Figur 3:: Einzelelement der Kleintierbrücke - Variante mit geschlossenem Untergeschoss* (zur Evertebratenwanderung), Darstellung ohne Füllung des Evertebratentunnels (* das Untergeschoss wurde der Übersicht halber ohne Löcher oder Schlitze dargestellt)

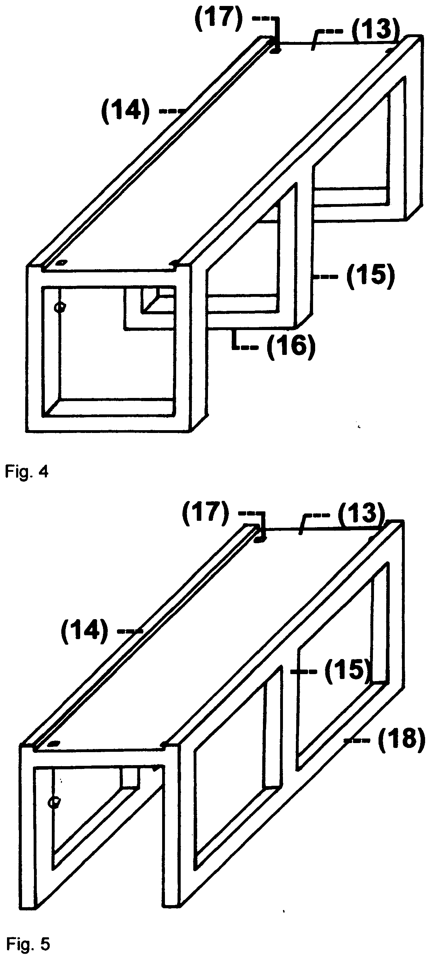

- Figur 4:: Einzelelement der Kleintierbrücke - Variante mit Querverbindungen
- Figur 5:: Einzelelement der Kleintierbrücke - Variante mit Längsverbindungen

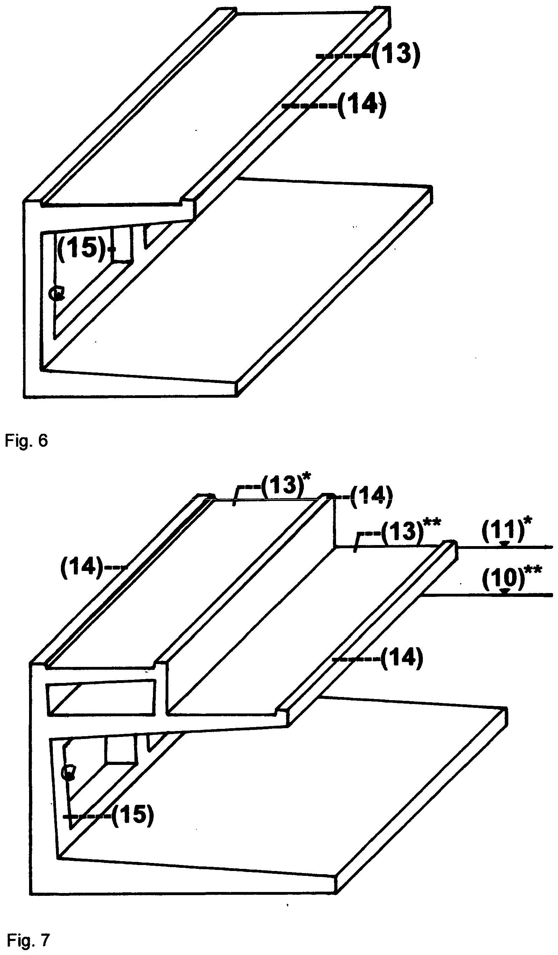

- Figur 6:: Einzelelement der Kleintierbrücke - Variante mit einem Seitenteil
- Figur 7:: Einzelelement der Kleintierbrücke - Variante mit einem Seitenteil und zwei Laufflächen* / ** (* Winter- und (Sommer-)lauffläche für winterlichen Mittelwasserabfluss besonders geeignet, ** Sommerlauffläche, wird im Winter zeitweise überspült)

### Bezugszeichenliste

- (1): - Kleintierbrücke
- (2): - Fließgewässer (Fluss, Bach)
- (3): - Böschung (zum Fließgewässer gehörend)
- (4): - Verkehrsweg (Straße, Autobahn)
- (5): - Verkehrswegbrücke (Straßenbrücke)
- (6): - Markierungssteine (zur Duftmarkierung der Tiere)
- (7): - Bäume und Sträucher
- (8): - Kleintierbrücke mit gefülltem Untergeschoss
- (9): - Kleintierbrücke - mit stabilisierenden Querverbindungen der Seitenteile
- (10): - Mittelwasserstand im Sommerhalbjahr
- (11): - Mittelwasserstand im Winterhalbjahr
- (12): - befestigte Gewässersohle z. B. Betongitterplatten
- (13): - Lauffläche
- (14): - erhöhte Seitenkante
- (15): - Seitenteil
- (16): - stabilisierende Querverbindung der Seitenteile
- (17): - Öffnung zur Aufnahme eines Verbindungsteiles
- (18): - stabilisierende Längsverbindung der Seitenteile
- (19): - Verbindungsteil (U-Stück)
- (20): - Untergeschoss
- (21): - Decke des Untergeschosses
- (22): - Rille zum Ineinanderschieben zweier Brückenelemente

## Patentansprüche

1. Kleintierbrücke zur Anordnung unter einer Brücke bei Fließgewässer - Verkehrsweg - Kreuzungen, wenn unterhalb der Brücke der Durchlass keine Bermen oder natürliche bzw. naturnahe Uferstrukturen aufweist, bestehend aus zusammensetzbaren bzw. aneinanderreihbaren Einzelelementen wobei
- es sich bei den Einzelelementen um zweckspezifisch vorgefertigte verrottungssichere Teile handelt, wobei die Elemente aus einem Betonwerkstoff, dass heißt aus Beton, Stahlbeton, Waschbeton oder Porenbeton, oder aus einer Kombination verschiedener Betonwerkstoffe hergestellt sind,
- die Elemente jeweils mindestens eine Lauffläche (13) und ein oder zwei Seitenteile (15) besitzen,
- die Seitenteile (15) weitgehend offen gestaltet sind, sodass die Brückenpfeiler jederzeit der Sichtkontrolle zugänglich sind,
- die Kleintierbrücke aus richtungsgeraden und -gebogenen beziehungsweise abgewinkelten Elementen aufgebaut ist, wobei die Winkelteile zur Einbindung in die Böschung oder bei Richtungsänderungen innerhalb des Durchlasses sowohl End- als auch Zwischenteile sein können,
- die Elemente durch Ineinanderhaken oder Ineinanderschieben der Stirnseiten oder den Einsatz von Verbindungsteilen (19) miteinander verbunden werden, und
- die Konstruktion bei Bedarf, z. B. bei Brückensanierung, zerstörungsfrei entfernt und später wieder aufgebaut werden kann.

2. Kleintierbrücke nach Anspruch 1 **dadurch gekennzeichnet**
- **dass** alle zum Wasser hinzeigenden Kanten abgerundet sind.

3. Kleintierbrücke nach einem der Ansprüche 1 oder 2
**dadurch gekennzeichnet**
- **dass** die Lauffläche, die Oberseite der Elemente, an den seitlichen oder Längskanten leichte Erhöhungen aufweist, und
- **dass** auf die Lauffläche im variablen Mischungsverhältnis geologische Substrate wie Kies, Sand, Steine und biogenes Material wie Holz, Äste, Rindenstücke, Moose aufgebracht sind.

4. Kleintierbrücke nach einem der Ansprüche 1 bis 3
**dadurch gekennzeichnet**
- **dass** die Seitenteile (15) durch Quer-, Längs- (Streben), Diagonalverbindungen oder
einer Kombination dieser verschiedenen Verbindungen stabilisiert sind.

5. Kleintierbrücke nach einem der Ansprüche 1 bis 4
**dadurch gekennzeichnet**
- **dass** die Kleintierbrücke mit einem befüllbaren Untergeschoss (20) ausgestattet ist,
- **dass** die Füllung aus geologischem und biogenem Material wie Kies, Steinchen, Steine, Holz, Rindenstücke usw. besteht, und
- **dass** das Untergeschoss Seiten aus Beton aufweist, die stark gelöchert oder geschlitzt sind, so dass aquatische Evertebraten bzw. Wasserinsekten diese passieren können.

6. Kleintierbrücke nach Anspruch 5
**dadurch gekennzeichnet**
- **dass** das Untergeschoss nach oben hin offen ist und nach Befüllung durch ein weitmaschiges bzw. grobes Geogitter, welches für aquatische Evertebraten bzw. Wasserinsekten durchlässig ist, abgedeckt wird, und
- **dass** das Geogitter an den Seitenteilen befestigt wird.

7. Kleintierbrücke nach Anspruch 5
**dadurch gekennzeichnet**
- **dass** die Abdeckung des Untergeschosses aus Beton besteht, der viele kleine Löcher oder Schlitze aufweist, und
- **dass** die Abdeckung somit für aquatische Evertebraten bzw. Wasserinsekten durchlässig ist.

## Claims

1. Bridge for small animals to the arrangement under a bridge with assembly-line waters - traffic route - crossroads if below the bridge the passage shows no artificial or natural or realistic bank structures, consisting of composeable or lineable up single elements
and
- it concerns with the single elements specifically for purpose precast parts sure about rotting and the elements are produced of a concrete material that is called of concrete, reinforced ferro-concrete, washing concrete or pore concrete or of a combination of different concrete materials,
- the elements own in each case at least one tread and one or two side parts,
- the side parts are formed widely openly, so that the bridge piers are accessible any time of the view control,
- the bridge for small animals from direction-straight and crooked or bent elements is built up and the corner parts can be final parts as well as connecting pieces for the integration in the embankment or by direction changes within the passage,
- the elements will form an alliance by hooked or teleskoped inside one another of the front ends or the application of connecting parts with each other, and
- the construction could be removed when required, for example with bridge renovation, without destruction and be rebuilt later.

2. Bridge for small animals after claim 1
thereby marked
- that all edges pointing to the water are rounded.

3. Bridge for small animals after one of the claims 1 or 2
thereby marked
- that the tread, the top of the elements, in the lateral edges shows light rises, and
- that on the tread in the variable mixing proportion geologic substrates are raised like gravel, sand, stones and biogenic material like wood, branches, bark malice, mosses.

4. Bridge for small animals after one of the claims from 1 to 3 thereby marked
- that the side parts are stabilised by Crosswise, along (striving), diagonal connections or a combination of these different connections.

5. Bridge for small animals after one of the claims from 1 to 4 thereby marked
- that the small animal bridge is equipped with a to fill basement,
- that the filling exists of geologic and biogenic material like gravel, little stones, stones, wood, bark malice, and
- that the basement shows sides of concrete which are strongly pestered or are slit, so that water invertebrates or water insects can pass this.

6. Bridge for small animals after claim 5
thereby marked
- that the basement is open upwards there and after filling by a wide-meshed or coarse geogrid which is permeable for water invertebrates or water insects, it is covered, and
- that the geogrid is fastened to the side parts.

7. Bridge for small animals after claim 5
thereby marked
- that the cover of the basement exists of concrete which shows many small holes or slits, and
- that the cover is permeable therefore for water invertebrates or water insects.

## Revendications

1. Pont pour petits animaux à l'ordre sous un pont à des eaux à la chaîne - la voie de communication - des croisements, si au-dessous du pont le passage ne montre aucuns de bord artificielles ou structures de bord naturelles ou proches de nature, se composant des éléments individuels pouvant être composés ou pouvant être alignés
et
- il s'agit aux éléments individuels des parties sûr de décomposition préfabriquées spécifique à la fin et les éléments d'un matériel de béton que s'appelle du béton, béton armé, béton de lavage ou béton de pores, ou d'une combinaison des matériels de béton différents sont produits,
- les éléments possèdent chaque fois au moins une surface de roulement et d'unes ou deux parties de côtés,
- les parties de côtés sont rendues en grande partie ouvertes si bien que les piliers de ponts soient accessibles à tout moment au contrôle de vue,
- le pont pour petits animaux des éléments droits de direction et tournés ou pliés est construit et les parties d'angle peuvent être des parties finales et aussi interparties pour l'intégration dans la pente ou lors des modifications de direction dans le passage,
- les éléments sont liés par l'un dans l'autre se coincent ou l'un dans l'autre poussent des fronts ou l'engagement des parties de lien l'un avec l'autre, et
- la construction peut être enlevée en cas de besoin, par exemple, à la réhabilitation de ponts, non destructif et être restaurée plus tard.

2. Pont pour petits animaux après l'exigence 1
ainsi caractérisé
- ce que tous les bords montrant à l'eau sont arrondis.

3. Pont pour petits animaux après l'une des exigences 1 ou 2 ainsi caractérisé
- ce que la surface de roulement, un supérieur côté des éléments, au latéral ou le long des bords montre les légères augmentations, et
- ce que sur surface de roulement dans variable proportions de matériel mélange géologique comme gravier, sable, pierres et bioguéris le matériel comme le bois, des branches, la fourberie d'écorces, les mousses sont introduites.

4. Pont pour petits animaux après l'une des exigences de 1 à 3 ainsi caractérisé
- ce que les parties de côtés sont stabilisées par De travers, le Long de la (poursuite), liens diagonaux ou une combinaison de ces liens différents.

5. Pont pour petits animaux après l'une des exigences de 1 à 4 ainsi caractérisé
- ce que le petit d'animal pont est équipé d'un sous-sol pouvant être rempli,
- ce que le remplissage se compose du matériel géologique et bioguéris comme le gravier, les petite pierres, les pierres, le bois, la fourberie d'écorces, et
- ce que le sous-sol montre des côtés du béton qui sont au plus fort harcelés ou sont fendus si bien qu'invertebrates d'eau ou insectes d'eau puissent passer celui-ci.

6. Pont pour petits animaux après l'exigence 5
ainsi caractérisé
- ce que le sous-sol est ouvert en haut là et après le remplissage par une geogrille à larges mailles ou grossière laquelle est perméable pour invertebrates d'eau ou des insectes d'eau, on recouvre, et
- ce que la geogrille aux parties de côtés est fixée.

7. Pont pour petits animaux après l'exigence 5
ainsi caractérisé
- ce que la couverture du sous-sol se compose du béton qui montre beaucoup de petits trous ou fentes, et
- ce que la couverture est perméable ainsi pour invertebrates d'eau ou des insectes d'eau.
